# FASCICULE DE BREVET EUROPEEN

(11) **EP 1 972 419 B1**
(45) Date de publication et mention de la délivrance du brevet: **28.10.2009**
(21) Numéro de dépôt: 08300121.4
(22) Date de dépôt: 28.02.2008
(51) Int. Cl.: B28B 1/26, B22F 3/22

(54) **Procédé de fabrication de pièces par PIM ou microPIM**
Verfahren zur Herstellung von Teilen durch PIM (Pulverspritzgießen) oder MikroPIM (Mikro-Pulverspritzgießen)
Method for manufacturing parts by PIM or microPIM

(30) Priorité: 22.03.2007 FR 0753985
(43) Date de publication de la demande: 24.09.2008
(73) Titulaire: COMMISSARIAT A L'ENERGIE ATOMIQUE, 75015 Paris (FR)
(72) Inventeur: FEDERZONI, Luc, 38300 BOURGOIN-JALLIEU (FR); REVIRAND, Pascal, 38120 SAINT EGREVE (FR)
(74) Mandataire: Vuillermoz, Bruno

(56) Documents cités:
- DE-A1- 2 462 434
- US-A- 4 113 480
- US-A- 5 427 734

## Description

### DOMAINE TECHNIQUE

La présente invention a trait à un nouveau mode de fabrication d'objets par les techniques de moulage par injection dite PIM, pour l'expression anglo-saxonne « *powder injection molding* » ou microPIM pour l'expression anglo-saxonne « *micro powder injection molding »*.

Un tel procédé permet d'obtenir des pièces ayant subi un retrait minimal au frittage, et donc présentant des répétabilités géométriques importantes. Il permet également la fabrication de pièces volumineuses.

Le procédé selon l'invention est particulièrement bien adapté dans le cas où les poudres du mélange-maître sont des nanopoudres de céramiques ou d'alliages métalliques.

### ETAT ANTERIEUR DE LA TECHNIQUE

La technique de moulage par injection (PIM, ou microPIM lorsqu'il s'agit de poudres ultrafines) est couramment utilisée pour la réalisation de divers objets.

Dans un tel procédé, la première étape consiste à obtenir un mélange-maître (ou *"feedstock")* adapté à l'application visée.

Les mélanges - maîtres sont constitués d'un mélange de matière organique (ou liant polymérique) et de poudres inorganiques (métalliques ou céramiques).

Ensuite, le mélange-maître s'injecte comme un thermoplastique.

Enfin, la pièce est déliantée puis frittée.

Toutefois, les procédés PIM actuellement mis en oeuvre présentent des limites, voire des inconvénients.

Un premier inconvénient concerne un défaut de précision des pièces fabriquées à l'aide d'un tel procédé, lié au fait que ces pièces subissent un retrait important au cours de l'étape de frittage. En effet, cette étape permet de ramener une pièce ayant une porosité de l'ordre de 40% à une porosité pratiquement nulle, par densification de la poudre. Cette étape entraîne donc un retrait volumique de l'ordre de 40%.

Dans la plupart des cas, ce retrait n'est pas parfaitement homogène ou isotrope, ce qui rend difficile la tenue de côtes géométriques très exigeantes. Ainsi, il est observé que la dispersion d'une côte géométrique sur une pièce frittée est, dans le meilleur des cas, égale à 0,5 % d'une côte géométrique donnée. Par exemple, une paroi d'une épaisseur de 2 mm est susceptible de présenter une dispersion d'épaisseur de 10 microns.

De plus, le frittage peut provoquer des distorsions importantes de la pièce, pouvant conduire à la fissuration de celle-ci en cours de frittage.

Par conséquent, les procédés PIM et microPlM ne peuvent pas être utilisés, dès lors que la précision géométrique des pièces devient trop exigeante.

Des solutions ont été recherchées pour surmonter ce problème. Ainsi, le document US 4 113 480 décrit un type de composition pour mélanges-maîtres permettant de minimiser les retraits au frittage. Ce type de composition permet d'atteindre une densité après deliantage proche de la densité tapée de la poudre (de l'ordre de 65% de la densité théorique). Dans ce cas, le retrait volumique au frittage est limité à 35%.

Ce document mentionne l'idée de chauffer le moule à une température la plus élevée possible, de manière à conduire à une extraction par séparation des polymères et de l'eau en voie liquide. Cette extraction s'arrête dès lors que la pièce présente une tenue mécanique suffisante pour pouvoir être extraite du moule. Le déliantage de l'eau se poursuit hors de la presse, ce qui conduit le plus souvent à la fissuration de la pièce.

Par ailleurs, cette solution ne convient qu'aux poudres grossières, qui ne sont pas susceptibles d'être entraînées par la déshydratation en voie liquide.

Il a également été envisagé d'améliorer l'homogénéité des mélanges-maîtres pour obtenir un retrait au frittage le plus homogène possible

A titre d'exemple, le document EP 0 468 467 présente une composition de mélange poudres/polymères permettant d'améliorer l'homogénéité du mélange par le contrôle du taux d'oxygène et par la réalisation d'un feedstock homogène en composition.

Une deuxième limite des procédés actuels de PIM concerne la dimension des pièces fabriquées. On considère classiquement que les pièces fabriquées par PIM ne peuvent excéder 2 cm. Cette limite est due à la difficulté liée au déliantage. En effet, le déliantage consiste à extraire de la matière organique dans le coeur de la matière. Pour les pièces de volume trop important, les pièces se fissurent ou explosent lors du déliantage.

Une autre difficulté consiste à appliquer ce procédé aux poudres fines, voire nanométriques.

En effet, il a été observé que l'utilisation des poudres ultrafines conduit à l'augmentation de la viscosité des mélanges à iso-taux de charge. Ce phénomène s'explique par l'augmentation de la surface spécifique des poudres, ce qui rend les effets de surface prépondérants dans le comportement rhéologique des mélanges.

Ainsi, les développements en cours sur le microPlM se heurtent à ce problème.
Actuellement, les seules solutions développées consistent à remplacer les mélanges traditionnels utilisés dans le PIM par des mélanges à base de cire à très faible viscosité. Ces solutions ont toutefois des limites et l'obtention de mélanges-maîtres à base de nanopoudres apparaît comme impossible. Or, la valorisation de cette voie pour la fabrication de microcomposants (détails très fins), de composants à très bon état de surface (faible Ra), ou tout simplement de composants avec de très bonnes propriétés mécaniques (nanomatériaux) apparaît comme extrêmement prometteuse.

Il existe donc un besoin évident de développer des procédés améliorés de fabrication de pièces par PIM ou microPIM.

### OBJET DE L'INVENTION

L'objet de la présente invention concerne donc un procédé de fabrication de pièces par la technique de moulage par injection, dans lequel la succession des étapes mises en oeuvre permet d'éviter les écueils classiques de cette technique.

Ainsi, le procédé selon l'invention permet d'obtenir des pièces, sans contrainte au niveau de leur taille ou de leur précision, notamment lorsqu'elles sont réalisées à partir de nanopoudres.

Classiquement, le procédé selon l'invention comprend les étapes essentielles suivantes :
- préparation d'un mélange - maître ;
- injection du mélange - maître dans le moule sous pression ;
- déliantage ;
- frittage.

Selon l'invention et de manière caractéristique, le mélange - maître comprend au moins une poudre mélangée à un liant polymérique solubilisé dans un solvant, ce mélange étant maintenu à une température supérieure à la température d'évaporation du solvant pendant le pressage.

Sans vouloir être lié à une quelconque théorie, il est fait l'hypothèse que l'injection sous pression du mélange-maître dans un moule très chaud provoque l'extraction *in situ* d'une bonne partie du polymère et de son solvant près de la surface, par voie vapeur. Ainsi, le solvant s'évapore et laisse le polymère en surface de la pièce. Ce phénomène conduit à un gain de temps très important par rapport aux procédés de l'art antérieur qui se font par voie liquide.

Il convient de noter que, selon l'invention, l'élimination du solvant de la pièce se fait intégralement avant son extraction. Ainsi, aucune étape supplémentaire de chauffage de la pièce (à une température certes supérieure à celle d'évaporation du solvant mais bien inférieure à celle mise en oeuvre dans l'étape de déliantage), après son extraction du moule, n'est nécessaire.

Comme déjà dit, l'étape essentielle du procédé selon l'invention consiste à maintenir, après injection, le mélange-maître sous pression et à une température supérieure à la température d'évaporation du solvant. Au cours de cette opération, le solvant s'échappe de la pièce, et s'évapore, entraînant avec lui le polymère qui migre vers la surface de l'échantillon. En se séparant du solvant, le polymère durcit, ce qui assure une coque solide qui maintient la poudre par cette coque plastique.

Par l'effet de la pression maintenue, la pièce continue à se densifier, le vide laissé par la migration du solvant et du polymère étant compensé par de la densification, à savoir l'agglomération des grains de poudre. Ce dernier aspect est fondamental dans le cadre des mélanges-maîtres préparés à partir de nanopoudres. En effet, malgré un taux de charge initial qui peut être faible (de l'ordre de 30 à 40%), le procédé selon l'invention permet d'atteindre des densités de pièces brunes, après déliantage, importantes.

De manière avantageuse, le procédé selon l'invention est donc mis en oeuvre sur des mélanges-maîtres contenant au moins une nanopoudre. Avantageusement, on entend par nanopoudre, une poudre dont les particules constitutives ont une taille inférieure à 100 nm.

A noter que l'étape ultérieure de séchage de la pièce après éjection est particulièrement favorable dans le cas de nanopoudres. En effet, il a été observé qu'au cours du déliantage d'un procédé traditionnel, les pièces moulées constituées de nanopoudres se désagrégeaient. Il est supposé que, en raison du volume très faible des grains de nanopoudres, c'est le pourcentage trop important de polymère qui entraîne ce phénomène. Or, le procédé selon l'invention permet d'éliminer ce phénomène.

Dans une première étape, un mélange-maître est donc réalisé. Il s'agit de mélanger au moins une poudre ou nanopoudre, avantageusement de type céramique ou métallique, un solvant et un polymère soluble dans le solvant.

Un tel mélange-maître peut être stocké, jusqu'à l'injection, dans un congélateur où il se solidifie.

De manière préférentielle, le solvant est un solvant aqueux, encore plus préférentiellement de l'eau.

Un polymère adapté, soluble dans l'eau à température ambiante, est la carboxymethyl cellulose (CMC).

Le polymère peut être présent à raison de 3% à 50% du volume total du mélange.

Le mélange est alors injecté dans une presse traditionnelle, par exemple une presse 25 tonnes. Une pression minimale de l'ordre de 140 bars est classiquement appliquée pendant environ 30 secondes.

Le résultat sera d'autant meilleur que la pression appliquée sera forte et que la durée sera longue.

Dans le cas où le solvant du mélange maître est de l'eau, le moule est chauffé au dessus de 100°C, par exemple à 110°C.

Au cours de ce chauffage, le solvant s'évapore et s'évacue par les jeux de fonctionnement du dispositif. Il est alors important de maintenir la pression initiale au sein du moule. Pour cela, on peut par exemple utiliser une presse à régulation de pression ou utiliser un ressort calibré placé derrière le moule, et qui maintient le mélange à la pression souhaitée pendant la phase de séchage.

De manière avantageuse, le moule est ensuite refroidi, par exemple à 80°C pendant quelques heures. Ceci permet de figer le polymère et durcit la coque de la pièce. La pièce peut alors être aisément éjectée et manipulée.

Sont alors réalisées des opérations classiques de déliantage thermique et de préfrittage, réalisées par exemple sous air à 1100°C. Cette étape de déliantage permet de débarrasser la pièce moulée du film de polymère crée à sa surface. Pendant la même opération de déliantage thermique, le préfrittage permet de prédensifier la pièce et rend sa manipulation plus aisée lors des opérations suivantes

L'étape ultime est l'étape de frittage, réalisée par exemple à une température de 1700°C.

Entre le déliantage et le frittage, il peut être prévu une étape supplémentaire d'élimination des résidus éventuels par lavage, notamment par trempage de la pièce dans l'eau.

Il apparaît que la présente invention présente simultanément l'ensemble des avantages suivants. Le procédé de fabrication de pièces, tel que décrit, permet :
- de fabriquer des pièces avec une densité à vert maximale, correspondant à la poudre sèche pressée à la pression de maintien de la presse ;
- de réaliser des pièces avec des retraits minimisés. En effet, du fait de l'obtention de densités importantes après éjection, le retrait au frittage en est minimisé ;
- de limiter l'opération de déliantage thermique à sa plus simple expression, et ce, quelle que soit la taille de la pièce à réaliser. En effet, le déliantage de la pièce consiste tout simplement à éliminer la peau de polymère ;
- d'assurer une faible pollution de la poudre à coeur (pollution au carbone, oxygène notamment), grâce à la migration du polymère en surface ;
- de fabriquer des pièces volumineuses. L'essentiel du déliantage à coeur est fait pendant l'opération de maintien en pression dans la presse, ce qui élimine le risque d'explosion/fissuration de la pièce.
- de fabriquer de pièces à partir de mélanges-maîtres de poudres, soit nanopoudres, soit fines, soit d'une manière générale inadaptées au PIM (poudres de morphologie non sphériques à très bas coût, ...).

### EXEMPLES DE REALISATION

Les exemples de réalisation qui suivent, à l'appui de la figure annexée, ont pour but d'illustrer l'invention mais ne sont en aucun cas limitatifs.

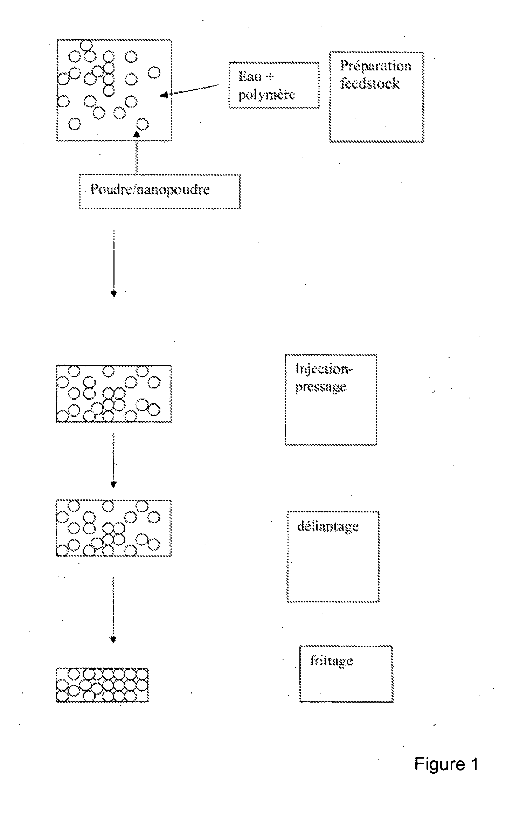

La figure 1 schématise les différentes étapes du procédé de fabrication selon l'invention, basé sur la technique de moulage par injection.

### 1. Réalisation d'une pièce en alumine

On réalise un mélange-maître à base de céramique. Celui-ci est composé de deux lots de poudres identiques d'alumine à spectre de granulométrie, l'un centré sur 150 nm, l'autre sur 300 nm.

La partie organique est composée de 8% de CMC, jouant le rôle de polymère, et le reste en eau. Le taux de charge volumique global est de 70%.

Après avoir été solidifié dans un congélateur, le mélange maître est injecté dans une presse 25 tonnes délivrant une pression de 140 bars.

Le cylindre est injecté dans un moule chauffé à 110°C. Une pression de 140 bars est maintenue pendant 30 secondes.

Ensuite le moule est refroidi à 80°C et la pièce est éjectée.

Du fait du maintien de la pression pendant l'étape de chauffage, la densité à vert (densité après injection) est proche de 75%, soit 5 points de plus que le taux de charge du mélange-maître.

La pièce est ensuite déliantée et préfrittée à 1100°C sous air.

La pièce est trempée dans l'eau à 80°C pendant 5 heures, puis frittée à 1700°C.

### 2. Réalisation d'une pièce en alumine à partir de poudres nanométriques

On réalise un mélange-maître à base de céramique qui, cette fois, est composé d'un lot de poudre de granulométrie centrée sur 50 nm (nanopoudre). Le taux de charge global est de 40%, ce qui est considéré, dans ce domaine technique, comme une charge trop faible pour conduire à des pièces intègres après le cycle de déliantage.

Après avoir été solidifié dans un congélateur, le mélange-maître est injecté dans une presse 25 tonnes.

Le cylindre est injecté dans un moule chauffé à 110°C. Une pression de 140 bars est maintenue pendant 30 secondes.

Ensuite, le moule est refroidi à 80°C et la pièce est éjectée.

Du fait du maintien de la pression, la densité à vert est proche de 60%, soit 20 points de plus que le taux de charge du mélange-maître.

La pièce est déliantée et préfrittée à 1100°C sous air.

La pièce est trempée dans l'eau à 80°C pendant 5 heures, puis frittée à 1700°C. La pièce finale apparaît comme étant intègre.

## Revendications

1. Procédé de fabrication de pièces par la technique de moulage par injection comprenant les étapes suivantes :
- préparation d'un mélange - maître comprenant au moins une poudre mélangée à un liant polymérique solubilisé dans un solvant ;
- injection du mélange - maître dans le moule sous pression ;
- déliantage ;
- frittage,
***caractérisé* en ce que** le mélange est maintenu à une température supérieure à la température d'évaporation du solvant pendant le pressage.

2. Procédé de fabrication de pièces selon la revendication 1, ***caractérisé* en ce que** lors de l'évaporation du solvant, la pression initiale au sein du moule est maintenue.

3. Procédé de fabrication de pièces selon l'une des revendications 1 et 2, ***caractérisé* en ce que** le mélange contient au moins une nanopoudre, dont les particules ont une taille inférieure à 100 nm.

4. Procédé de fabrication de pièces selon l'une des revendications 1 à 3, ***caractérisé* en ce que** le solvant est un solvant aqueux, préférentiellement de l'eau.

5. Procédé de fabrication de pièces selon l'une des revendications précédentes, ***caractérisé* en ce que** le liant polymérique est de la carboxymethyl cellulose (CMC).

6. Procédé de fabrication de pièces selon l'une des revendications précédentes, ***caractérisé* en ce que** le liant polymérique est présent à raison de 3% à 50% du volume total du mélange - maître.

7. Procédé de fabrication de pièces selon l'une des revendications précédentes, ***caractérisé* en ce que** le moule est refroidi dans le but de l'éjection de la pièce, avant l'étape de déliantage.

8. Procédé de fabrication de pièces selon l'une des revendications précédentes, ***caractérisé* en ce qu'**une étape de lavage est réalisée avant l'étape de frittage.

## Claims

1. A method for fabricating parts by the injection molding technique comprising the steps of:
- preparing a feedstock - comprising at least one powder mixed with a polymer binder solubilized in a solvent;
- injecting the feedstock into the mold under pressure;
- debinding;
- sintering,
***characterized* in that** the feedstock is maintained at a temperature above the solvent vaporization temperature during the pressing.

2. The parts fabrication method as claimed in claim 1, ***characterized* in that** during the evaporation of the solvent, the initial pressure in the mold is maintained.

3. The parts fabrication method as claimed in either of claims 1 and 2, ***characterized* in that** the feedstock contains at least one nanopowder, of which the particles are smaller than 100 nm.

4. The parts fabrication method as claimed in one of claims 1 to 3, ***characterized* in that** the solvent is an aqueous solvent, preferably water.

5. The parts fabrication method as claimed in one of the preceding claims, ***characterized* in that** the polymer binder is carboxymethyl cellulose (CMC).

6. The parts fabrication method as claimed in one of the preceding claims, ***characterized* in that** the polymer binder is present in a proportion of 3% to 50% of the total volume of the feedstock.

7. The parts fabrication method as claimed in one of the preceding claims, ***characterized* in that** the mold is cooled for ejecting the part, before the debinding step.

8. The parts fabrication method as claimed in one of the preceding claims, ***characterized* in that** a washing step is carried out before the sintering step.

## Patentansprüche

1. Verfahren zur Herstellung von Teilen mittels der Spritzgießverfahrenstechnik, die folgenden Schritte umfassend:
- Zubereiten einer Vormischung, die mindestens ein Pulver umfasst, das mit einem in einem Lösungsmittel gelösten polymeren Bindemittel gemischt ist,
- Einspritzen der Vormischung unter Druck in die Form;
- Entbinden;
- Sintern,
**dadurch gekennzeichnet, dass** während des Pressvorgangs die Mischung auf einer Temperatur gehalten wird, die höher ist als die Verdunstungstemperatur des Lösungsmittels.

2. Verfahren nach Anspruch 1 zur Herstellung von Teilen, **dadurch gekennzeichnet, dass** bei der Verdunstung des Lösungsmittels der Anfangsdruck im Inneren der Form aufrechterhalten bleibt.

3. Verfahren nach einem der Ansprüche 1 und 2 zur Herstellung von Teilen, **dadurch gekennzeichnet, dass** die Mischung mindestens ein Nanopulver enthält, dessen Partikel eine Größe von unter 100 nm haben.

4. Verfahren nach einem der Ansprüche 1 bis 3 zur Herstellung von Teilen, **dadurch gekennzeichnet, dass** das Lösungsmittel ein wässriges Lösungsmittel, vorzugsweise Wasser ist.

5. Verfahren nach einem der vorhergehenden Ansprüche zur Herstellung von Teilen, **dadurch gekennzeichnet, dass** das polymere Bindemittel Carboxymethylcellulose (CMC) ist.

6. Verfahren nach einem der vorhergehenden Ansprüche zur Herstellung von Teilen, **dadurch gekennzeichnet, dass** das polymere Bindemittel in einem Verhältnis von 3% bis 50% des Gesamtvolumens der Vormischung vorhanden ist.

7. Verfahren nach einem der vorhergehenden Ansprüche zur Herstellung von Teilen, **dadurch gekennzeichnet, dass** die Form vor dem Entbindeschritt in der Absicht, das Teil auszuwerfen, gekühlt wird.

8. Verfahren nach einem der vorhergehenden Ansprüche zur Herstellung von Teilen, **dadurch gekennzeichnet, dass** vor dem Sinterschritt ein Waschschritt durchgeführt wird.
